**Europäisches Patentamt**

**European Patent Office**

**Office européen des brevets**

(19)

(11) Veröffentlichungsnummer : **0 054 248**
**B2**

(12) **NEUE EUROPÄISCHE PATENTSCHRIFT**

(45) Veröffentlichungstag der neuen Patentschrift :
04.05.88

(21) Anmeldenummer : 81110259.9

(22) Anmeldetag : 08.12.81

(51) Int. Cl.⁴ : **C 02 F 1/78, C 02 F 3/26,**
**C 02 F 1/64, C 02 F 9/00**

(54) Verfahren und Vorrichtung zur Aufbereitung von Rohwasser.

(30) Priorität : 11.12.80 DE 3046707

(43) Veröffentlichungstag der Anmeldung :
23.06.82 Patentblatt 82/25

(45) Bekanntmachung des Hinweises auf die Patenterteilung : 26.09.84 Patentblatt 84/39

(45) Bekanntmachung des Hinweises auf die Entscheidung
über den Einspruch : 04.05.88 Patentblatt 88/18

(84) Benannte Vertragsstaaten :
**AT BE CH DE FR GB IT LI NL**

(56) Entgegenhaltungen :
DD-A-    57 570
DE-A- 1 767 671
DE-A- 2 719 638
DE-A- 2 738 812
FR-A- 2 100 321
US-A- 4 104 166
Archiv des Badewesens, Jahrgang 3, Heft 4, 1963, W.
Drobeck; "Die Ozoniesierung des Abwassers", Seiten 8,9
GWF, Jahrgang 109, Heft 32, 1968, M. Simon; "Die
neue Ozonanlage der Stadt Duisburg", Seiten 877-
882
BBR, Jahrgang 4, 1980, O. Leitzke; "Aufbereitung von
Oberflächenwasser", Seiten 156-159

(73) Patentinhaber : **Linde Aktiengesellschaft**
**Abraham-Lincoln-Strasse 21**
**D-6200 Wiesbaden (DE)**

(72) Erfinder : **Berger, Michael, Dr.**
**Ascholdinger Strasse 17a**
**D-8000 München 71 (DE)**

(74) Vertreter : **Schaefer, Gerhard, Dr.**
**Linde Aktiengesellschaft Zentrale Patentabteilung**
**D-8023 Höllriegelskreuth (DE)**

EP 0 054 248 B2

**Beschreibung**

Die Erfindung betrifft ein Verfahren zur Aufbereitung von Rohwasser zu Nutzwasser, bei dem das Rohwasser in einem Hauptstrom nacheinander einer Sauerstoffanreicherung, einer Flockung, einer Ozonreaktionsstufe und einer Nachbehandlung zugeführt wird, ein Teilstrom des so aufbereiteten Nutzwassers über eine Ozoneintragseinrichtung mit Ozon angereichert und danach dem Hauptstrom des Rohwassers zwischen Flockung und Ozonreaktionsstufe zugemischt wird, und das Ozon für die Ozoneintragseinrichtung aus reinem Sauerstoff gewonnen wird.

Die Aufbereitung von Roh- und Abwasser zu Trink- und Nutzwasser erfordert immer mehr hochwirksame, umweltfreundliche und kostengünstige Verfahren. Diese Forderungen werden vor allem durch einen Ozonzusatz zum Wasser erfüllt. Aufgrund seiner großen oxidativen Wirkung baut das Ozon die organischen Inhaltsstoffe ab und dient somit zur Entkeimung des Rohwassers.

Das Ozon kann aus Luft oder reinem Sauerstoff gewonnen werden. Die Erzeugung von Ozon aus Luft hat jedoch zur Folge, daß der Gewichtsanteil des Ozons im Gasgemisch nur ca. 1 bis 2 % beträgt, wodurch die Eintragsverfahren verhältnismäßig kostspielig werden. Demgegenüber arbeitet man bei Ozon-Sauerstoff-Gemischen mit über 4 Gew.% Ozon, was mit erheblichen Einsparungen bei den Investitionskosten verbunden ist.

Aus der Zeitschrift bbr 4/80, Seiten 156-159 ist bekannt, Rohwasser nach Zugabe von Flockungsmitteln in einer Reaktionsstufe mit einem mit Ozon hoch angereichertem Teilstrom des bereits behandelten Wassers zu vermischen, wodurch eine intensive Reaktion des Ozons mit den Wasserinhaltsstoffen erfolgt. In einer Nachbehandlung erfolgt eine nochmalige Zugabe von Flockungsmitteln und eine anschließende Filtrierung über Aktivkohlefilter. Das nachbehandelte Reinwasser verläßt die Anlage, nachdem ein Teilstrom abgezweigt wird, der auf erhöhten Druck gebracht wird. Dieser Teilstrom gelangt zur Anreicherung mit Ozon und Sauerstoff in eine Füllkörperkolonne und anschließend in die Reaktionsstufe. Der in der Füllkörperkolonne nicht verbrauchte Sauerstoff verläßt als Kreislaufsauerstoff die Kolonne am Kopf und muß vor Wiedereintritt in den Ozoneur gekühlt, getrocknet, auf den im Ozoneur herrschenden Druck entspannt und durch Sauerstoff-Frischgas ergänzt werden.

Beim Eintrag des Ozon-Sauerstoff-Gemisches in die Füllkörperkolonne kommt es gleichzeitig zum Austrag von im Teilstrom-Wasser gelösten Stickstoff. Hierdurch wird das Kreislaufgas mit Stickstoff verdünnt. Dieser Effekt hat weitreichende Folgen : Durch eine komplizierte Analytik und Regeltechnik muß der Stickstoffgehalt im Kreislaufgas in Grenzen gehalten werden.

Dennoch erreicht das Kreislaufgas nicht immer die für den optimalen Betrieb des Ozoneurs erforderlichen Werte. Aus diesem Grunde sind die Energieausbeute des Ozoneurs und die erzielbare Ozonkonzentration unbefriedigend. Insgesamt ist die Kreislaufführung des Sauerstoffträgergases kompliziert und wirtschaftlich ungünstig.

Aus dem Aufsatz « Die Ozonisierung des Trinkwassers » in Archiv des Badewesens 3/4, 1963, Seite 8 bis 9, ist ferner ein Wasseraufbereitungsverfahren von Rohwasser zu Nutzwasser bekannt, bei dem Rohwasser nacheinander einer Verdüsung, einer Filtration über Quarzkiesfilter, einer Ozonisierung und einer Nachbehandlung durch ein Aktivkohlefilter zugeführt wird. Das bei der Ozonisierung anfallende ozonhaltige Abgas wird zur Verdüsung zurückgeführt.

Aufgabe der vorliegenden Erfindung ist es, ein Verfahren der eingangs beschriebenen Art und eine Vorrichtung zur Durchführung des Verfahrens bereitzustellen, die es erlauben, Rohwasser auf einfache und wirtschaftliche Weise unter verbesserter Ausnutzung des Ozon-Sauerstoff-Gemisches aufzubereiten.

Diese Aufgabe wird erfindungsgemäß dadurch gelöst, daß die Nachbehandlung eine aerobe biologische Behandlung ist, in der Ozoneintragseinrichtung anfallendes Abgas der Sauerstoffanreicherung und bei der Sauerstoffanreicherung anfallendes Abgas der biologischen Stufe zugeführt wird.

Das wesentliche der Erfindung ist somit die Vermeidung der Kreislaufführung des Sauerstoffes und die stufenweise Weiterverwendung des in der Ozoneintragseinrichtung anfallenden Abgases bei Behandlungsschritten, bei denen ansonsten frischer Sauerstoff eingesetzt werden müßte. Das Abgas der Ozoneintragseinrichtung vermag jedoch diese Ansprüche dank seines Restozon- und seines hohen Sauerstoffgehaltes und Sauerstoff-Partialdruckes ebenfalls zu erfüllen.

Durch die stufenweise Verwendung des anfallenden Abgases kann auch mit relativ einfachen Eintragssystemen unter niedrigen Drücken eine gute Ozon-Sauerstoff-Ausnutzung erzielt werden. Durch die gute Energiebilanz des Ozoneurs mit reinem Sauerstoff bzw. einem idealen Sauerstoff-Stickstoff-Gemisch ergibt sich eine überlegene Wirtschaftlichkeit, die auch dadurch erreicht wird, daß zahlreiche Apparate, Armaturen, Regel- und Meßgeräte durch die Vermeidung der Kreislaufführung des Sauerstoffes und der damit verbundenen Behandlungsstufen entfallen. Außerdem ergeben sich erhebliche energetische Einsparungen.

Der hohe Sauerstoff-Partialdruck in sämtlichen Behandlungsstufen bewirkt, daß die biologischchemischen Oxidationsprozesse ähnlich vorteilhaft wie mit reinem Sauerstoff ablaufen ; zusätzlich wird durch die Dislokalisierung der Oxidationsprozesse auf mehrere Stufen noch eine höhere Flexibilität und Sicherheit erzielt. Das erfindungsgemäße Verfahren erlaubt weiterhin in einfacher Weise den Umbau bereits bestehender Wasseraufbereitungsstationen.

Erfindungsgemäß wird nach der biologischen Stufe ein Teilstrom des aufbereiteten Nutzwassers über eine Ozoneintragseinrichtung mit Ozon angereichert und danach dem Hauptstrom des Rohwassers nach der Flockung zugemischt und das in der Ozoneintragseinrichtung anfallende Sauerstoff, Stickstoff und Ozon enthaltende Abgas der der Ozonreaktionsstufe vorgeschalteten Sauerstoffanreicherung zugeführt. Das Abgas der Sauerstoffanreicherung wird der der Ozonreaktionsstufe nachgeschalteten biologischen Stufe zugeführt.

Eine Vorrichtung zur Durchführung des Verfahrens verfügt über einen Zulauf für Rohwasser zu einem eine Sauerstoffeintragseinrichtung aufweisenden Mischbecken mit einer Flockungszone, eine nachgeschaltete Ozonreaktionszone, eine Nachbehandlungszone und einen Ablauf für aufbereitetes Nutzwasser, wobei vom Ablauf eine Leitung für einen Teilstrom des aufbereiteten Nutzwassers zu einer Ozoneintragseinrichtung führt, die eine Ableitung für mit Ozon angereichertes Wasser, die mit der Ozonreaktionszone in Verbindung steht, aufweist.

Erfindungsgemäß ist die Nachbehandlungszone als aerobe biologische Behandlungszone ausgebildet, eine Abgasleitung für restozonhaltiges Abgas der Ozoneintragseinrichtung mit der Sauerstoffeintragseinrichtung des Mischbeckens verbunden und eine Abgasleitung des Mischbeckens an die biologische Behandlungszone angeschlossen.

Das erfindungsgemäße Verfahren sei im folgenden anhand eines Ausführungsbeispiels, das in einer Figur schematisch dargestellt ist, näher erläutert.

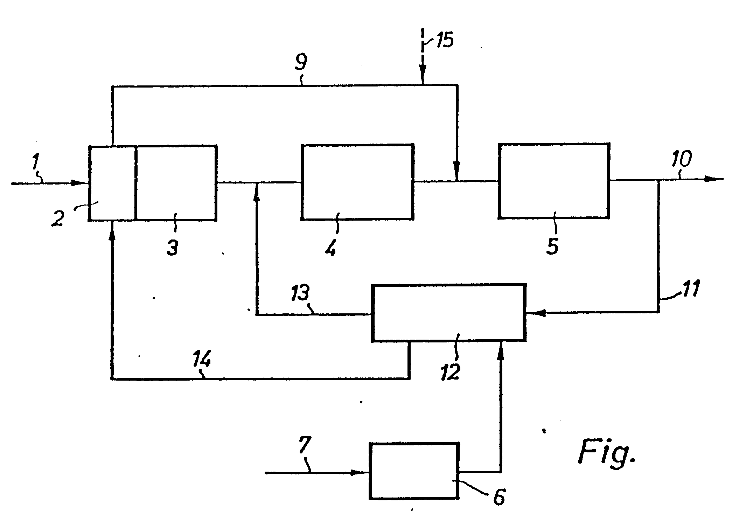

Die Figur zeigt ein Blockschema mit Frischwasserteilstrom.

Rohwasser gelangt über eine Leitung 1 in ein Mischbecken 2 mit Flockungszone 3, anschließend in eine Ozonreaktionsstufe 4 und dann in eine biologische Stufe 5. Das gereinigte Wasser verläßt die Aufbereitungsanlage nach der biologischen Stufe 5 über eine Leitung 10. Vom gereinigten Wasser in Leitung 10 wird ein Teilstrom über Leitung 11 abgezweigt und einer Ozoneintragsvorrichtung 12, beispielsweise einer Füllkörperkolonne, zugeführt. In die Füllkörperkolonne 12 gelangt weiterhin das im Ozoneur 6 erzeugte Ozon-Sauerstoff-Gemisch, das vorteilhaft einen hohen (über 4 Gew.%) Ozonanteil aufweist. Das mit Ozon und Sauerstoff angereicherte, sogenannte Starkwasser, verläßt die Füllkörperkolonne 12 über Leitung 13 und dem Rohwasser nach der Flockungsstufe 3 und vor der Ozonreaktionsstufe 4 zugeführt.

Das in der Füllkörperkolonne 12 anfallende sauerstofffreie Abgas enthält neben Stickstoff noch Restozon. Über Leitung 14 wird dieses Abgas von der Füllkörperkolonne 12 zum Mischbecken 2 geführt und in dieses beispielsweise mittels einer ABS-Turbine eingetragen und mit dem Rohwasser vermischt. Das in Mischbecken 2 nicht verbrauchte sauerstoffreiche Abgas enthält noch Stickstoff und wird über Leitung 9 zur weiteren Verwendung in der biologischen Stufe 5 dieser zugeführt.

Damit kommt der nicht vollständige Ozoneintrag der Flockungsstufe 3 zugute, da durch den relativ hohen Ozonanteil die vorhandenen Schmutzkolloide im Rohwasser zerstört werden und somit die Flockbarkeit gefördert wird und außerdem bereits Eisen, Mangan, Ammoniak und/oder Methan oxidativ eliminiert werden können.

Das Abgas aus dem Mischbecken 2 enthält kein Ozon mehr, doch ist es an Sauerstoff reich genug, um in der der Ozonstufe 4 nachgeschalteten biologischen Stufe 5 in die es über Leitung 9 gelangt, eine wirksame Enteisenung und/oder Entmanganung des ozonisierten Wassers bzw. eine oxidative Eliminierung von Ammoniak oder Methan zu bewirken.

Der im Abgas noch vorhandene Stickstoff ist bei den Oxidationsprozessen keineswegs störend.

Beispiel :

Aus $1 Nm^3 = 1\,430$ g Sauerstoff können ungefähr 90 g Ozon gewonnen werden. Diese 90 g Ozon reichen erfahrungsgemäß zur Behandlung von ca. 40 m³ Rohwasser (Richtwert : 1,2 bis 4 g Ozon/m³ Rohwasser).

Beim Eintrag dieser 90 g Ozon in das Wasser werden gleichzeitig vergleichbare Mengen Sauerstoff eingetragen, so daß für die biologische Behandlung der 40 m³ Rohwasser noch etwa 1 200 g Sauerstoff zur Verfügung stehen.

Hieraus resultiert eine Sauerstoff-Konzentration von ungefähr 30 g Sauerstoff/m³ Rohwasser. Diese Sauerstoff-Konzentration ist auch bei schlechteren Rohwässern für eine weitgehend oxidative Eliminierung von BSB5, Eisen, Mangan, Ammoniak usw. ausreichend.

**Patentansprüche**

1. Verfahren zur Aufbereitung von Rohwasser zu Nutzwasser, bei dem das Rohwasser in einem Hauptstrom nacheinander einer Flockung, einer Ozonreaktionsstufe und einer Nachbehandlung zugeführt wird, ein Teilstrom des so aufbereiteten Nutzwassers über eine Ozoneintragseinrichtung mit Ozon angereichert und danach dem Hauptstrom des Rohwassers zwischen Flockung und Ozonreaktionsstufe zugemischt wird, und das Ozon für die Ozoneintragseinrichtung aus reinem Sauerstoff gewonnen wird, dadurch gekennzeichnet, daß die Nachbehandlung eine aerobe biologische Behandlung ist, in der Ozoneintragseinrichtung anfallendes Abgas einer der Flockung vorgeschalteten Sauerstoffanreicherung und bei der Sauerstoffanreicherung anfallendes Abgas der biologischen Stufe zugeführt wird.

2. Verfahren nach Anspruch 1, dadurch gekennzeichnet, daß dem bei der Sauerstoffanreicherung anfallenden Abgas reiner Sauerstoff oder ein mehr Sauerstoff als Luft enthaltendes Gas zugeführt wird.

3. Vorrichtung zur Durchführung des Verfahrens nach Anspruch 1 mit einem Zulauf für Rohwasser zu einem eine Sauerstoffeintragseinrichtung aufweisenden Mischbecken mit einer Flockungszone, einer nachgeschalteten Ozonreaktionszone, einer Nachbehandlungszone und einem Ablauf für aufbereitetes Nutzwasser, wobei vom Ablauf eine Leitung für einen Teilstrom des aufbereiteten Nutzwasser zu einer Ozoneintragseinrichtung führt, die eine Ableitung für mit Ozon angereichertes Wasser, die mit der Ozonreaktionszone in Verbindung steht, aufweist, dadurch gekennzeichnet, daß die Nachbehandlungszone als aerobe biologische Behandlungszone 5 ausgebildet ist, eine Abgasleitung 14 für restozonhaltiges Abgas die Ozoneintragseinrichtung 12 mit der Sauerstoffeintragseinrichtung des Mischbeckens 2 verbindet und eine Abgasleitung 9 des Mischbeckens 2 an die biologische Behandlungszone 5 angeschlossen ist.

4. Vorrichtung nach Anspruch 3, dadurch gekennzeichnet, daß an die Abgasleitung 9 des Mischbeckens 2 eine Gaszuleitung 15 für reinen Sauerstoff oder ein mehr Sauerstoff als Luft enthaltendes Gas angeschlossen ist.

**Claims**

1. Process for the conditioning of untreated water to produce service water, in which the untreated water is fed in a mainstream successively to a flocculation, an ozone reaction stage and an after-treatment, a part-stream of the service water which has been conditioned in this way is enriched with ozone via an ozone-introduction device and is then mixed into the mainstream of the untreated water between the flocculation and ozone reaction stage, and the ozone for the ozone-introduction device is obtained from pure oxygen, characterized in that the after-treatment is an aerobic biological treatment in which exhaust gas resulting in the ozone-introduction device is fed to an oxygen enrichment preceding the flocculation, and exhaust gas produced in the oxygen enrichment is fed to the biological stage.

2. Process according to Claim 1, characterized in that pure oxygen or a gas containing more oxygen than air is fed into the exhaust gas resulting from the oxygen enrichment.

3. Installation for carrying out the process according to Claim 1, having an inlet for untreated water into a mixing basin with an oxygen-introduction device and a flocculation zone, and having a downstream ozone reaction zone, an after-treatment zone and an outlet for conditioned service water, there being a pipe for a part-stream of the conditioned service water leading from the outlet to an ozone-introduction device which has a discharge pipe for ozone-enriched water, which pipe is connected to the ozone reaction zone, characterized in that the aftertreatment zone is designed as an aerobic biological treatmemt zone 5, an exhaust gas pipe 14 for residual ozonecontaining exhaust gas from the ozone-introduction device 12 is connected to the oxygen-introduction device of the mixing basin 2, and an exhaust gas pipe 9 from the mixing basin 2 is connected to the biological treatment zone 5.

4. Installation according to Claim 3, characterized in that a gas supply pipe 15 for pure oxygen or a gas which contains more oxygen than air is connected to the exhaust gas pipe 9 from the mixing basin 2.

**Revendications**

1. Procédé de traitement des eaux impures en vue de les transformer en eaux purifiées, dans lequel on fait passer les eaux impures sous forme d'un courant principal successivement par une étape de floculation, une étape d'ozonisation et une étape de post-traitement, un courant partiel des eaux ainsi purifiées étant enrichi en ozone dans un dispositif d'apport d'ozone pour être ensuite ajouté au courant principal des eaux impures entre l'étape de floculation et l'étape d'ozonisation, l'ozone alimentant ledit dispositif d'apport d'ozone étant préparé à partir d'oxygène pur, caractérisé en ce que le post-traitement est un traitement biologique aérobie dans lequel du gaz effluent du dispositif d'apport d'ozone est amené à être enrichi en oxygène puis en amont de l'étape de floculation, cependant que du gaz issu de l'enrichissement en oxygène est amené vers l'étape de traitement biologique.

2. Procédé selon la revendication 1, caractérisé en ce que l'on ajoute au gaz issu de l'enrichissement en oxygène, de l'oxygène pur ou un gaz plus riche en oxygène que l'air.

3. Dispositif pour la mise en œuvre du procédé selon la revendication 1, comportant une conduite d'amenée des eaux impures vers une cuve de mélange comportant un dispositif d'apport d'oxygène et une zone de floculation, puis une zone d'ozonisation, une zone de post-traitement et une conduite d'évacuation pour les eaux purifiées, cependant qu'une conduite pour un courant partiel d'eaux purifiées relie la conduite d'évacuation à un dispositif d'apport d'ozone comportant une conduite d'évacuation d'eaux enrichies en ozone qui est reliée à la zone d'ozonisation, caractérisé en ce que la zone de post-traitement est constituée par une zone de traitement biologique aérobie (5), en ce qu'une conduite de gaz effluent (14) pour du gaz renfermant de l'ozone résiduaire relie ledit dispositif d'apport d'ozone (12) au dispositif d'apport d'oxygène associé à la cuve de mélange (2) et en ce qu'un conduit de gaz effluent (9) de la cuve de mélange (2) est relié à ladite zone de traitement biologique (5).

4. Dispositif selon la revendication 3, caractérisé en ce que la conduite de gaz effluent (9) de la cuve de mélange (2) est reliée à une conduite d'amenée de gaz (5) appelée à amener de l'oxygène pur ou un gaz plus riche en oxygène que l'air.

Fig.

0 054 248